# EUROPEAN PATENT APPLICATION

(11) **EP 2 789 234 A1**
(43) Date of publication of application: **15.10.2014**
(21) Application number: 13177555.3
(22) Date of filing: 23.07.2013
(51) Int. Cl.: A01N 1/02

(54) **Solution utilizing nitrogen contained water for preserving or flushing organs for transplantation, method for preparing the solution and method for preserving or flushing organs for transplantation utilizing the solution**

(30) Priority: 10.04.2013 JP 2013081815
(71) Applicant: Showa Freezing Plant Co., Ltd., Kushiro-shi Hokkaido 085-0022 (JP)
(72) Inventor: Wakayama, Toshitsugi, Kushiro-shi, Hokkaido 0855-0022 (JP); Wakayama, Seiko, Kushiro-shi, Hokkaido 085-0022 (JP)
(74) Representative: Müller, Enno

(57) **Abstract**

With regard to a solution for immersion preserving organs for transplantation, or a solution for flushing before preservation or at the time of reperfusion, the present invention provides a solution which can extend the preservation time and reduce organ damage, in comparison with the related art.

A solution utilizing nitrogen contained water for preserving or flushing organs for transplantation, wherein a solvent of the solution is the nitrogen contained water which was prepared by adding nitrogen gas to water and reducing dissolved oxygen. A method for preparing a solution for preserving or flushing organs for transplantation, comprising a step of dissolving a composition comprising a plurality of component materials which are intended to be solutes of the solution in liquid which is intended to be a solvent of the solution. The liquid which is intended to be the solvent of the solution is the nitrogen contained water which was prepared by adding nitrogen gas to water and reducing dissolved oxygen.

## Description

### Background of the invention

### Field of the Invention;

The present invention relates to a solution for immersion preserving or flushing organs for transplantation, a method for preparing said solution and a method for preserving or flushing organs for transplantation utilizing said solution.

### Description of the related art:

In order to maintain the organs' state of when the organs for transplantation were enucleated, the organs are stored in hypothermic condition by immersing them in preservation solutions. The Euro-Collins solution (including glucose and electrolyte) and the UW solution (including impervious component and colloid oncotic pressure component) are known as preservation solutions for the organs for transplantation. However, the Euro-Collins solution is effective for kidney of which the viability is high, but it is insufficient for other organs. The UW solution has a problem of instability as a drug formulation. Thus, various improvements for these organ preservation solutions have been made so far.

Japanese Patent Laid-Open Publication No. 2000-191401 discloses an addition of glucosyl-L-ascorbic acid to an organ preservation solution for enhancing the stability as a drug formulation. Japanese Patent Laid-Open Publication No. 2004-300098 discloses a method utilizing a bilirubin containing solution which is an antioxidant containing solution, as a perfusate for reperfusing an organ graft before transplantation which was perfused with an organ preservation solution and stored in low temperature for prescribed hours, to prevent organ damage. Japanese Patent Laid-Open Publication No. 2006-316000 discloses an addition of a class of fullerenes to an organ preservation solution. Japanese Patent Laid-Open Publication No. 2009-221128 discloses an addition of flavonoid glycoside to an organ preservation solution. Japanese Patent Laid-Open Publication No. 2012-060976 discloses an addition of cytostatic agents utilizing insects derived peptide to an organ preservation solution.

However, it is entirely different technical field, Japanese Patent No. 4969897 discloses a method for preserving fresh foods utilizing nitrogen contained water where oxygen dissolved in regular water is displaced with nitrogen, or nitrogen contained ice which is made by freezing said nitrogen contained water, for the purpose of preventing oxidation and putrefaction of the fresh foods.

### Summary of the invention

Most of the solutions for preserving or perfusing the organs for transplantation are prepared by adding various components for improving the well known Euro-Collins solution or the UW solution. These result in enhanced stabilities of the prepared solutions and the extension of the organ preservation time in comparison with the original Euro-Collins solution and the UW solution.

However, in particular, for the organ transplantation from brain dead donors, the places of enucleation and transplantation are often far away from each other, and also it is customary to take a long time for selecting recipients. In such case, relative to all the various organs, solutions which can reduce the organ damage due to the preservation and extend the preservation time have not been achieved.

In light of the above circumstances, the object of the present invention is to provide a solution for immersion preserving the organs for transplantation, or a solution for flushing before preservation or at the time of reperfusion, which can extend the preservation time and reduce the organ damage. In addition, the object of the present invention is to provide a method for preparing said solution. Furthermore, the object of the present invention is to provide a method for preserving or flushing the organs for transplantation utilizing said solution.

In order to solve the problem, the present invention includes following configurations.

According to a first aspect of the present invention, a solution for preserving or flushing organs for transplantation wherein a solvent of the solution is nitrogen contained water which was prepared by adding nitrogen gas to water and reducing dissolved oxygen.

According to a second aspect of the present invention, a method for preparing a solution for preserving or flushing organs for transplantation comprising a step of dissolving a composition comprising a plurality of component materials which are intended to be solutes of the solution in liquid which is intended to be a solvent of the solution wherein the liquid which is intended to be the solvent is nitrogen contained water which was prepared by adding nitrogen gas to water and reducing dissolved oxygen.

According to a third aspect of the present invention, a method for preserving or flushing organs for transplantation comprising a step of preparing a solution by dissolving a composition comprising a plurality of component materials which are intended to be solutes of the solution for preserving or flushing the organs for transplantation in liquid which is intended to be a solvent of the solution, and a step of preserving or flushing the organs for transplantation utilizing said prepared solution, wherein the liquid which is intended to be the solvent is nitrogen contained water which was prepared by adding nitrogen gas to water and reducing dissolved oxygen.

During immersion preservation of the organs for transplantation, tissue damage of the organs due to oxygen deficiency is prevented by inhibiting oxygen consumption of the cell temporarily. Therefore, various kinds of improved solutions are provided conventionally by adding antioxidants or cytostatic agents as the component. However, these improvements of the solutions for preserving or flushing the organs for transplantation are conventionally concentrated on only for improving the solute component entirely, and water which is a solvent that comprises a majority of the solutions has not been focused on. Water utilized as a solvent for the solution is usually purified water of which impurities are removed or distilled water. In addition, in which case, physiologically tolerated buffer fluid or isotonic fluid such as a physiological saline, a phosphate buffered saline, a citrate buffer solution or a Ringer solution is utilized as a base instead of pure water, and the major portion of these solutions is still a solvent, and that is water.

The present invention was achieved by focusing on water which comprises the majority of the solution for preserving or flushing the organs for transplantation. By utilizing the nitrogen contained water instead of regular water, the function of the solution may be improved, compared to the solution utilizing regular water. Thus, by utilizing the nitrogen contained water with reduced dissolved oxygen as a solvent, contact of the organs for transplantation with dissolved oxygen decreases, and that makes the antioxidant effect and cytostatic activity of the solute more enhanced. As a result, in which case, the organs for transplantation are preserved or flushed with the solution, the preservation time of the organs may be extended and the organ damage may be reduced, in comparison with the related art.

### Brief description of the drawings

FIG.1 is a flow chart showing a method for preserving or flushing the organs for transplantation with the solution utilizing the nitrogen contained water.
FIG.2 is a block diagram showing an example of a manufacturing system of the nitrogen contained water utilized in the present invention.

### Detailed description of the invention

Embodiments of the present invention will be described below. The solution of the present invention utilizing the nitrogen contained water for preserving or flushing the organs for transplantation is characterized in that the solvent of the solution is the nitrogen contained water which was prepared by adding nitrogen gas to water to reduce dissolved oxygen in water.

The term "preserving organs for transplantation" as used herein is intended to mean maintaining physiological and functional state of organs of when the organs for transplantation were enucleated. The term "a solution for preserving" as used herein is intended to mean a solution where the organs for transplantation were immersed to maintain said state. The term "a solution for flushing" as used herein is intended to mean a solution for flushing the organs for transplantation with maintaining the organs' said state before immersion of the enucleated organs or before reperfusion of the organs performed just before transplantation.

The component materials of the solute of the present invention, except for the nitrogen contained water which is a solvent, may be any kinds of component materials contained in the solutions for preserving or flushing the organs for transplantation of the related art. The solute of the related art's solutions is a composition comprising a plurality of various kinds of component materials. While, water which is a solvent is usually purified water or distilled water since it is used in medical application. The term "purified water or distilled water" as used herein is intended to mean in a broad sense including various kinds of water (including such as sterile purified water, injection solvent other than purified water in a narrow sense) utilized in medical application as a solution for the organs for transplantation. In addition, in which case, liquid intended to be a base of the related art's solution is a physiologically tolerated buffer fluid or isotonic fluid such as a physiological saline, a phosphate buffered saline, a citrate buffer solution or a Ringer solution, the liquid becomes the solution of the present invention, by displacing the water portion which is a solvent of the liquid, with the nitrogen contained water. Furthermore, for example, if the water portion of the well known Euro-Collins solution or the UW solution is displaced with the nitrogen contained water, then the solutions are included in the scope of the present invention' s solution.

A method for preparing the solution comprising a step of dissolving a composition comprising a plurality of component materials which are intended to be the solutes of the solution in liquid which is intended to be the solvent of the solution. The liquid which is intended to be the solvent is the nitrogen contained water or nitrogen dissolved water which was prepared by adding or dissolving nitrogen gas to water to reduce dissolved oxygen. The solute may be solid, liquid or including both of them. The solution is prepared at the appropriate time. For example, if the solution is unstable for maintaining the component's composition for a long time after preparation, the needed amount of solution is prepared just before the flushing is performed before the preservation or beginning of the immersion preservation of the organs for transplantation, or just before flushing performed before reperfusion. If the solution is stable after preparation, it may be productize in a prepared liquid configuration.

For preserving the organs for transplantation, preferably, in general, the organs are preserved in proper low temperature, but more proper temperature should be set according to the properties of the solutions.

The organs preserved or flushed with the solution of the present invention include such as bone marrow, cornea, eyeball, bone, skin, blood vessel, heart valve, parathyroid, kidney, liver, pancreas, lung and heart, and including parts thereof.

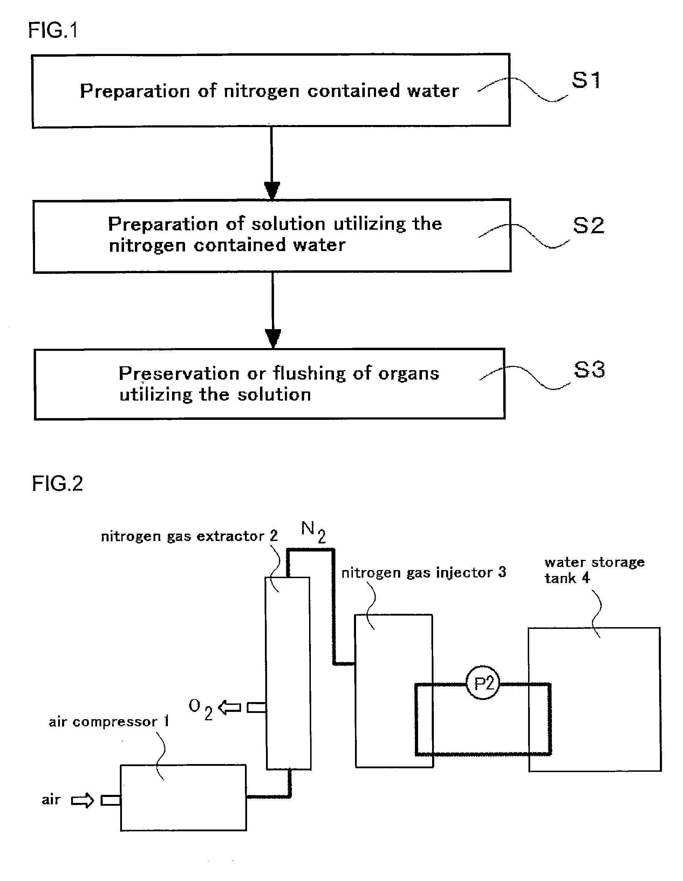

FIG.1 is a flow chart showing a method for preserving or flushing the organs for transplantation with the solution utilizing the nitrogen contained water.
In step S1, the nitrogen contained water is prepared from raw water. Preferably, the nitrogen contained water is prepared by a manufacturing system indicated in FIG.2 described below. In step S2, the solution is prepared utilizing the nitrogen contained water prepared by above mentioned process in step S1. In step S3, the organ intended to transplant is preserved and
flushed utilizing the solution prepared in step S2. The same processes in the method utilizing the known solutions may be applied to the method for preserving or flushing the organs utilizing the solution of the present invention, except for the process utilizing the solution utilizing the nitrogen contained water.
FIG.2 is a block diagram showing an example of the manufacturing system of the nitrogen contained water utilized in the present invention.
First, water storage tank 4 is filled with raw water. Then, nitrogen gas is injected into the raw water for reducing dissolved oxygen to prepare the nitrogen contained water. Subsequently, the nitrogen contained water is tapped off and utilized as the solvent of the solution of the present invention.

Air compressor 1 is an air compressor (for example, Oil-Free "BEBICON" (registered trademark) available from Hitachi Industrial Equipment Systems Co., Ltd.) compresses air and delivers it to the nitrogen gas extractor 2. The air compressor with supplied air pressure over a range of 0.5 MPa to 0.9 MPa is used.

Nitrogen gas extractor 2 is a degasifier which captures the compressed air to an edge of a pressure vessel having a nitrogen demarcation membrane made of polyimide hollow fiber membrane, purges oxygen from a side opening, and delivers nitrogen gas from other edge of the pressure vessel. Difference of transmission rate of membrane caused by different kinds of gas is utilized herein. This degasifier is provided as an apparatus with a configuration of which nitrogen gas extractor 2 and nitrogen gas injector 3 are integrally formed (for example, "Ripureru" (registered trademark) available from KATAYAMA CHEMICAL, INC.).

Water is circulated between nitrogen gas injector 3 and water storage tank 4 by pump P2. Nitrogen gas injector 3, for instance, allows passage of 2m³ of water per hour and has a capacity of removing oxygen to a level of 1.0mg dissolved oxygen per liter.

In addition, in the nitrogen contained water manufacturing system in FIG.2, it is preferred to incorporate a manufacturing mechanism of purified water for medical application. For example, an appropriate filter for screening out impurities may be inserted between nitrogen gas injector 3 and water storage tank 4. This allows to prepare purified nitrogen contained water in one system.

Generally, for instance, relation between water temperature and dissolved oxygen is as follows.

| Water temperature (°C) | Dissolved oxygen (mg/L) |
|---|---|
| 0 | 14.6 |
| 10 | 10.9 |
| 20 | 8.8 |

The nitrogen contained water preparing test was conducted using the system indicated in FIG.2.

### Method of the test

First, water storage tank 4 was filled with 300 liters of raw water (as this is a test, tap water was used). Then, nitrogen gas was injected into the raw water with 0.2 MPa supplied pressure of air compressor 1 for three and a half hours.

### Result of the test

| Time | Water temperature (°C) | Dissolved oxygen (mg/L) |
|---|---|---|
| start time | 8.4 | 4.99 |
| after 1 hour | 9.1 | 3.13 |
| after 2 hours | 9.6 | 3.02 |
| after 3 and 1/2 hours | 9.2 | 1.36 |

As indicated in the result of the test, dissolved oxygen in water is greatly reduced by injecting nitrogen gas into water.

### Explanation of references

1... air compressor
2... nitrogen gas extractor
3...nitrogen gas injector
4...water storage tank

## Claims

1. A solution for preserving or flushing organs for transplantation, wherein a solvent of the solution is nitrogen contained water which was prepared by adding nitrogen gas to water and reducing dissolved oxygen.

2. A method for preparing a solution for preserving or flushing organs for transplantation comprising
a step of dissolving a composition comprising a plurality of component materials which are intended to be solutes of the solution in liquid which is intended to be a solvent of the solution, wherein the liquid which is intended to be the solvent is nitrogen contained water which was prepared by adding nitrogen gas to water and reducing dissolved oxygen.

3. A method for preserving or flushing organs for transplantation comprising:
a step of preparing a solution by dissolving a composition comprising a plurality of component materials which are intended to be solutes of the solution for preserving or flushing the organs for transplantation in liquid which is intended to be a solvent of the solution, and
a step of preserving or flushing the organs for transplantation utilizing the prepared solution,
wherein the liquid which is intended to be the solvent is nitrogen contained water which was prepared by adding nitrogen gas to water and reducing dissolved oxygen.
